(19) Europäisches Patentamt
European Patent Office
Office européen des brevets

(11) **EP 1 806 954 B1**

(12) **EUROPEAN PATENT SPECIFICATION**

(45) Date of publication and mention
of the grant of the patent:
**09.03.2011 Bulletin 2011/10**

(21) Application number: **05793496.0**

(22) Date of filing: **17.10.2005**

(51) Int Cl.:
**H05B 6/66** (2006.01)

(86) International application number:
**PCT/JP2005/019046**

(87) International publication number:
**WO 2006/043512 (27.04.2006 Gazette 2006/17)**

(54) **HIGH-FREQUENCY HEATING POWER SUPPLY DEVICE**

HOCHFREQUENZ-HEIZUNGS-STROMVERSORGUNGSEINRICHTUNG

DISPOSITIF D'ALIMENTATION DE CHAUFFAGE HAUTE FRÉQUENCE

(84) Designated Contracting States:
**DE FR GB**

(30) Priority: **18.10.2004 JP 2004302598**

(43) Date of publication of application:
**11.07.2007 Bulletin 2007/28**

(73) Proprietor: **Panasonic Corporation
Kadoma-shi
Osaka 571-8501 (JP)**

(72) Inventors:
• **MORIYA, Hideaki,
c/o Matsushita Elec. Ind. Co., Ltd
Chuo-ku, Osaka-shi, Osaka 540-6319 (JP)**
• **SUENAGA, Haruo,
c/o Matsushita Elec. Ind. Co., Ltd
Chuo-ku, Osaka-shi, Osaka 540-6319 (JP)**
• **SAKAI, Shinichi,
c/o Matsushita Elec. Ind. Co., Ltd
Chuo-ku, Osaka-shi, Osaka 540-6319 (JP)**
• **SHIROKAWA, Nobuo,
c/o Matsushita Elec. Ind. Co., Ltd
Chuo-ku, Osaka-shi, Osaka 540-6319 (JP)**
• **KINOSHITA, Manabu,
c/o Matsushita Elec. Ind. Co., Ltd
Chuo-ku, Osaka-shi, Osaka 540-6319 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 441 566       JP-A- 4 215 287
JP-A- 2000 058 252      JP-A- 2003 308 960
JP-A- 2004 006 384      JP-A- 2005 302 375
US-A1- 2004 118 832**

## Description

### Technical Field

The present invention relates to a control for suppressing generation of harmonic current components in a field of a high frequency heating apparatus such as a microwave oven which performs a dielectric heating process by driving a magnetron.

### Background Art

A power supply used in cooking appliances based on high-frequency heating such as a microwave oven used at home has been required to be small in size and light in weight owing to the nature of the cooking appliances. It is desirable that the space for accommodating the power supply is small in order to easily carry it and enlarge a cooking space in the kitchen. For this reason, the microwave oven is becoming smaller and lighter and being manufactured at low cost with employing a switching power supply. As a result, the power supply outputs a current waveform containing lots of harmonic components which are generated by a switching operation of the power supply. In addition, the microwave oven consumes as much as 2000 watts for the sake of shortening the cooking time. As a result, an absolute value of the current is also increased, and it makes difficult to meet a harmonics performance of the power supply. In light of this problem, a control method (improvement measure) for suppressing generation of the harmonic current components has been proposed (for example, see Patent Document 1).

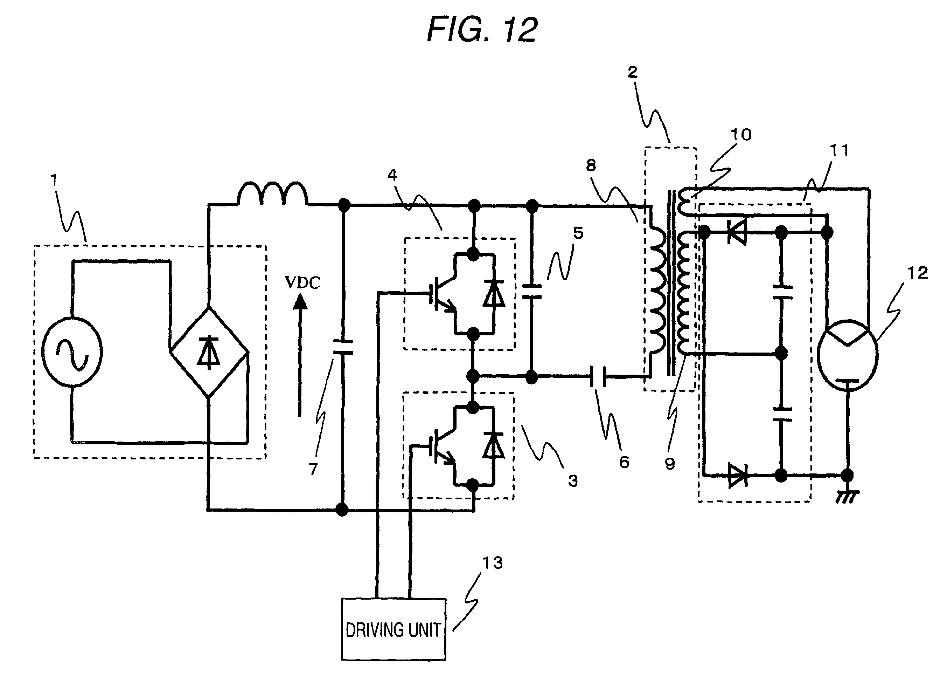

Fig. 12 shows one exemplary diagram of a magnetron-driving power supply for a high frequency heating apparatus (inverter power supply). The magnetron-driving power supply is constituted by a direct-current (DC) power supply 1, a leakage transformer 2, a first semiconductor switching element 3, a first capacitor 5 (snubber capacitor), a second capacitor 6 (resonant capacitor), a third capacitor 7 (smoothing capacitor) a second semiconductor switching element 4, a driving unit 13, a full-wave voltage doubler rectification circuit 11, and a magnetron 12.

The DC power supply 1 applies a DC voltage VDC to a serially connected circuit including the second capacitor 6 and a first coil winding eight of the leakage transformer 2 by performing a full-wave rectification of a commercial power supply. The first semiconductor switching element 3 and the second semiconductor switching element 4 are connected to each other in series and the serially connected circuit including the second capacitor 6 and the first coil winding 8 of the leakage transformer 2 is connected in parallel to the second semiconductor switching element 4.

The first capacitor 5 is connected in parallel to the second semiconductor switching element 4 and serves as the snubber that prevents a surging current (voltage) during a switching process. The high AC voltage output generated in a second coil winding 9 of the leakage transformer 2 is transformed into a high DC voltage in the full-wave voltage doubler rectification circuit 11, and then applied between the anode and cathode of the magnetron 12. A third coil winding 10 of the leakage transformer 2 supplies current to the cathode of the magnetron 12.

The first semiconductor switching element 3 and the second semiconductor switching element 4 are each constituted by an IGBT and a flywheel diode connected in parallel to the IGBT. As a matter of course, the first and second semiconductor switching elements 3 and 4 are not limited to such a kind, but a thyristor, a GTP switching device, and the like can be also used.

The driving unit 13 has an oscillation unit therein for generating driving signals for driving the first semiconductor switching element 3 and the second semiconductor switching element 4. The oscillation unit generates a square wave with a predetermined frequency and transmits the driving signals to the first semiconductor switching element 3 and the second semiconductor switching element 4. Immediately after any one of the first semiconductor switching element 3 and the second semiconductor switching element 4 is turned off, voltage across the both ends of the other semiconductor switching element is high. Consequently, when any one thereof is turned off, a spike-like surge current is produced and thus unnecessary loss and noise are generated. However, by providing a dead time, the turn-off can be delayed until the voltage across the both ends becomes 0 V. Consequently, the unnecessary loss and the noise can be suppressed. As a matter of course, the same operation is similarly applicable to the case of a reverse switching process.

The detailed description of each operation mode of the driving signals generated by the driving unit 13 will be omitted. However, the characteristics of the circuit configuration shown in Fig. 12 is that the voltage produced by the first semiconductor switching element 3 and the second semiconductor switching element 4 is equal to the DC power supply voltage VDC, that is,

$$240\sqrt{2} = 339 \text{ V},$$ even in Europe where the highest voltage 240 V is used at general home. Consequently, even though an emergency situation such as lightning surge or abrupt voltage drop is taken into consideration, the first semiconductor switching element 3 and the second semiconductor switching element 4 can be used as a low-cost device which has a resistance to a 600 V or so (for example, see Patent Document 2).

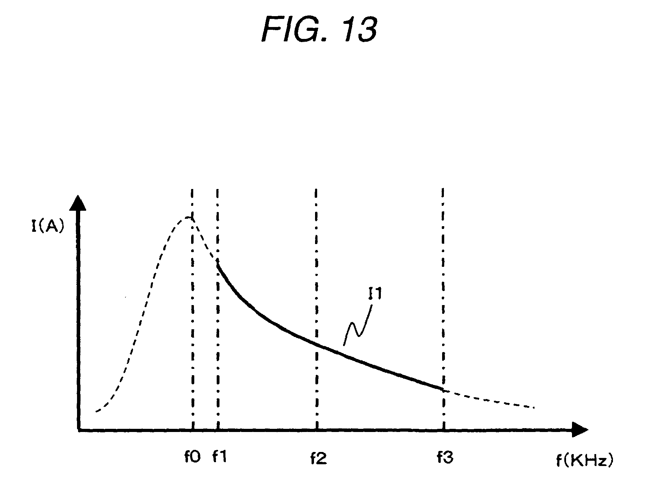

Next, Fig. 13 shows a resonant property of this kind in an inverter power supply circuit (where an inductance L and a capacitor C constitute the resonant circuit). Fig. 13 is a diagram illustrating a property of current and a working frequency at the time of applying a predetermined voltage to the inverter resonant circuit, and a frequency f0 is a resonant frequency. During the practical inverter operation, a curved line property I1 (solid line) of the current and frequency is used in the frequency range from f1 to f2 which is higher than the frequency f0.

That is, when the resonant frequency is f0, the current I1 has the maximum, and the current 11 reduces as the frequency range increases from F 1 to F3. That is because current that flows in the second coil winding of the leakage transformer increases since the current 11 approaches the resonant frequency at the time when the current I1 approaches the low frequency in the frequency range from f1 to f3. Conversely, since the current I1 becomes more distant from the resonant frequency at the time when the current I1 approaches the high frequency, the current of the second coil winding of the leakage transformer decreases. The inverter power supply for driving the magnetron, which is a nonlinear load, obtains a desired output by varying the frequency. For example, it is possible to obtain a continuous output, which is not impossible to obtain in an LC power supply, in the vicinity of f3, f2, and f1 in the case of the power output of 200 W, 600 W, and 1200 W, respectively.

In addition, the alternating current commercial power supply is used. Accordingly, when high voltage is not applied to the vicinity of power supply phases 0° and 180°, the inverter operating frequency is configured to the vicinity of f1, where resonant current increases, in the phases depending on a magnetron property in which a high frequency is not oscillated. In this manner, it is possible to increase a conduction angle in which electrical waves are transmitted by raising a boosting ratio of the applied voltage of the magnetron to the voltage of the commercial power supply. As a result, it is possible to embody a current waveform in which the fundamental wave components are numerous and the harmonics components is small, by changing the inverter operating frequency in every power supply phase. That is, the harmonics performance of the power supply depends on the good or bad control of the frequency modulation.
Patent Document 1: JP-A-2004-006384
Patent Document 2: JP-A-2000-058252
EP 1,441,566 A2 relates to a variable frequency inverter microwave oven, which comprises a magnetron for generating electromagnetic waves, a direct current voltage generator for rectifying and smoothing a commercial alternating current voltage and a switching device for performing a switching operation based on the DC voltage from the DC voltage generator to generate an AC voltage. It is aimed at providing a variable frequency inverter microwave oven capable of varying a switching frequency of a switching device for AC voltage generation to lengthen a drive duration of the magnetron, thereby improving heating efficiency and reliability of the inverter microwave oven and preventing internal devices thereof from being damaged.

Disclosure of the Invention

Problem that the Invention is to solve

However, there is a following drawback or more in the configuration described above.

That is, a constant non-uniformity (coupling coefficient or capacitance value) of major components (leakage transformer or resonant capacitor) constituting an inverter circuit or a non-uniformity (zener voltage) of a zener diode making the power supply Vcc of a control IC unit results in a non-uniformity of an own fundamental inverter resonant circuit or a frequency modulation waveform. Moreover, the non-uniformity causes an inverter operating frequency to vary, and causes a current waveform containing the harmonics components not to meet the harmonics performance of the power supply depending on the extent of non-uniformity.

Means for Solving the Problem

In order to solve the above-described drawback, the invention has been made so as to provide a configuration capable of providing many parameters for configuring a frequency modulation waveform and easily varying the occurrence of a square wave with a predetermined frequency, the square wave produced in an oscillation unit for transmitting a driving signal of a semiconductor switching element.

According to the invention having the above-described configuration, the frequency modulation waveform handling the constant non-uniformity of the major components (leakage transformer or resonant capacitor) constituting the inverter circuit or the non-uniformity of the zener diode making the power supply Vcc of a control IC unit can be formed. In addition, the harmonics performance of the power supply can be satisfied in the any combination condition and the degree of margin for a standard value can be increased.

Advantage of the Invention

With a high frequency heating apparatus according to the invention, an inverter operating frequency in each phase of the commercial power supply is variable, and it is possible to embody a current waveform in which a harmonic component is small, by enlarging the operating frequency in the range from 0° to 90°. It is possible to form a frequency modulation waveform in which the degree of freedom is high by providing an upper limit clamp, a lower limit clamp, and a lower limit value corresponding to the lowest frequency in the frequency modulation waveform determining the inverter operating frequency. Furthermore, it is possible to easily form the frequency modulation waveform for handling an unavoidable constant non-uniformity of major components constituting the high frequency heating apparatus.

Brief Description of the Drawings

Fig. 1 is a diagram illustrating a circuit configuration of a high frequency heating apparatus according to a first to fourth embodiments of the invention.

Fig. 2 is a diagram illustrating an oscillation circuit configuration according to the first embodiment of the invention.

Fig. 3 is a graph illustrating a property of a frequency modulation output and an inverter operating frequency according to the first embodiment of the invention.

Fig. 4 is a diagram illustrating a frequency modulation-forming circuit in detail according to a second embodiment of the invention.

Fig. 5 is a diagram illustrating the frequency modulation-forming circuit in detail according to the second embodiment of the invention.

Figs. 6(a) and 6(b) are graphs illustrating frequency modulation waveforms according to the second embodiment of the invention.

Fig. 7 is a diagram illustrating the frequency modulation-forming circuit in detail according to a third embodiment of the invention.

Fig. 8 is a diagram illustrating the frequency modulation-forming circuit in detail according to the third embodiment of the invention.

Figs. 9(a) and 9(b) are graphs illustrating the frequency modulation waveforms according to the third embodiment of the invention.

Fig. 10 is a diagram illustrating the frequency modulation-forming circuit in detail according to a fourth embodiment of the invention.

Fig. 11 is a graph illustrating the frequency modulation-forming circuit according to the fourth embodiment of the invention.

Fig. 12 is a diagram illustrating a circuit configuration of the known magnetron-driving high frequency heating apparatus (inverter power supply).

Fig. 13 is a graph illustrating a property of current and a working frequency at the time of applying a predetermined voltage to the inverter resonant circuit.

Description of Reference Numerals and Signs

1: DC POWER SUPPLY
2: LEAKAGE TRANSFORMER
3: FIRST SEMICONDUCTOR SWITCHING ELEMENT (SWITCHING ELEMENT)
4: SECOND SEMICONDUCTOR SWITCHING ELEMENT (SWITCHING ELEMENT)
5: FIRST CAPACITOR
6: SECOND CAPACITOR
7: THIRD CAPACITOR

11: FULL-WAVE VOLTAGE DOUBLER RECTIFICATION CIRCUIT
12: MAGNETRON
14: DRIVING CONTROL IC UNIT
15: FREQUENCY MODULATION-FORMING CIRCUIT
16: OSCILLATION CIRCUIT
17: DEAD TIME-FORMING CIRCUIT
18: SWITCHING ELEMENT-DRIVING CIRCUIT
19: CONSTANT INPUT CONTROL CIRCUIT
155, 156, 157: RESISTOR
158, 159: DIODE
161, 162: RESISTOR (SERIES RESISTOR)

Best Mode for Carrying Out the Invention

According to a first aspect of the invention, a high frequency heating apparatus drives a magnetron by allowing a semiconductor switching element to perform a high frequency switching operation using a commercial power supply, in which the frequency of the high frequency switching operation is variable so that the frequency ascends in the phase range of the power supply from 0° to 90° and from 180° to 270° and descends in the phase range of the power supply from 90° to 180° and from 270° to 360°; and the difference in the operating frequencies between the ascending and descending periods is large.

According to a second aspect of the invention, in the high frequency heating apparatus according to the first aspect of the invention, the frequency of the high frequency switching operation is easily variable by varying a parallel combined resistance value of series resistors.

According to a third aspect of the invention, in the high frequency heating apparatus according to the first aspect of the invention, the variation in the frequency of the high frequency switching operation can be represented as the shape pf a frequency modulation waveform; and wherein the frequency modulation waveform is formed on the basis of a rectification waveform of the commercial power supply and has an upper limit clamp.

According to a fourth aspect of the invention, in the high frequency heating apparatus according to the first aspect of the invention, the variation in the frequency of the high frequency switching operation can be represented as the shape of the frequency modulation waveform; and wherein the frequency modulation waveform is formed on the basis of a rectification waveform of the commercial power supply and has a lower limit clamp.

According to a fifth aspect of the invention, in The high frequency heating apparatus according to the first aspect of the invention, the variation in the frequency of the high frequency switching operation can be represented as the shape of the frequency modulation waveform; and wherein the frequency modulation waveform is formed on the basis of the rectification waveform of the commercial power supply and has a lower limit value corresponding to the restriction of the lowest frequency.

According to a sixth aspect of the invention, in the high frequency heating apparatus according to the first aspect of the invention, the variation in the frequency of the high frequency switching operation can be represented as the shape of the frequency modulation waveform; and wherein the frequency modulation waveform is formed on the basis of the rectification waveform of the commercial power supply and has an upper limit clamp, a lower limit clamp, a lower limit value corresponding to the restriction of the lowest frequency.

According to a seventh aspect of the invention, in the high frequency heating apparatus according to the sixth aspect of the invention, the difference between the upper limit clamp and the lower limit clamp is as small as possible and the shape of the frequency modulation waveform is nearly flat.

According to an eighth aspect of the invention, in the high frequency heating apparatus according to the third or sixth aspect of the invention, the upper limit clamp is uniquely determined as a predetermined fixed value (upper limit value) independent from a variation in voltage values of the commercial power supply.

According to a ninth aspect of the invention, in the high frequency heating apparatus according to the third or sixth aspect of the invention, the upper limit clamp is uniquely determined as a value that undergoes a small variation through a resistor or a diode from a predetermined value independent from a variation in voltage values of the commercial power supply.

According to a tenth aspect of the invention, in the high frequency heating apparatus according to the third or sixth aspect of the invention, the upper limit clamp is determined as a reference value (upper limit value) that varies depending on a variation in voltage values of the commercial power supply.

According to an eleventh aspect of the invention, in the high frequency heating apparatus according to the third or sixth aspect of the invention, the upper limit clamp is determined as a value that undergoes a small variation through a resistor or a diode from a predetermined value that varies depending on a variation in voltage values of the commercial power supply.

According to a twelfth aspect of the invention, in the high frequency heating apparatus according to the fourth or sixth aspect of the invention, the lower limit clamp is uniquely determined as a fixed value (lower limit value) independent from a variation in voltage values of the commercial power supply.

According to a thirteenth aspect of the invention, in the high frequency heating apparatus according to the fourth or sixth aspect of the invention, the lower limit clamp is uniquely determined as a value that undergoes a small variation through a resistor or a diode from a predetermined value independent from a variation in voltage values of the commercial power supply.

According to a fourteenth aspect of the invention, in the high frequency heating apparatus according to the fourth or sixth aspect of the invention, the lower limit clamp is determined as a reference value (lower limit value) that varies depending on a variation in voltage values of the commercial power supply.

According to a fifteenth aspect of the invention, in the high frequency heating apparatus according to the fourth or sixth aspect of the invention, the lower limit clamp is determined as a value that undergoes a small variation through a resistor or a diode from a predetermined value varied depending on a variation in voltage values of the commercial power supply.

According to a sixteenth aspect of the invention, in the high frequency heating apparatus according to the fourth or sixth aspect of the invention, the lower limit value corresponding to the restriction of the lowest frequency is uniquely determined as a predetermined fixed value (lower limit value) independent from a variation in voltage values of the commercial power supply.

According to a seventeenth aspect of the invention, in the high frequency heating apparatus according to the fifth or sixth aspect of the invention, the lower limit value corresponding to the restriction of the lowest frequency is uniquely determined as a predetermined fixed value (lower limit value) that varies depending on a variation in voltage values of the commercial power supply.

In above-described configuration, even under the condition that several non-uniformities such as the constant non-uniformity of the major components constituting the inverter circuit or the non-uniformity of the zener diode making the power supply (Vcc) of a control IC unit, the frequency modulation waveform capable of handling the drawbacks can be formed. In addition, the harmonics performance of the power supply can be satisfied in the any combination condition and the degree of margin for a standard value can be increased.

Hereinafter, embodiments of the invention will be described with reference to drawings. The invention is not limited to the embodiments.

(First Embodiment)

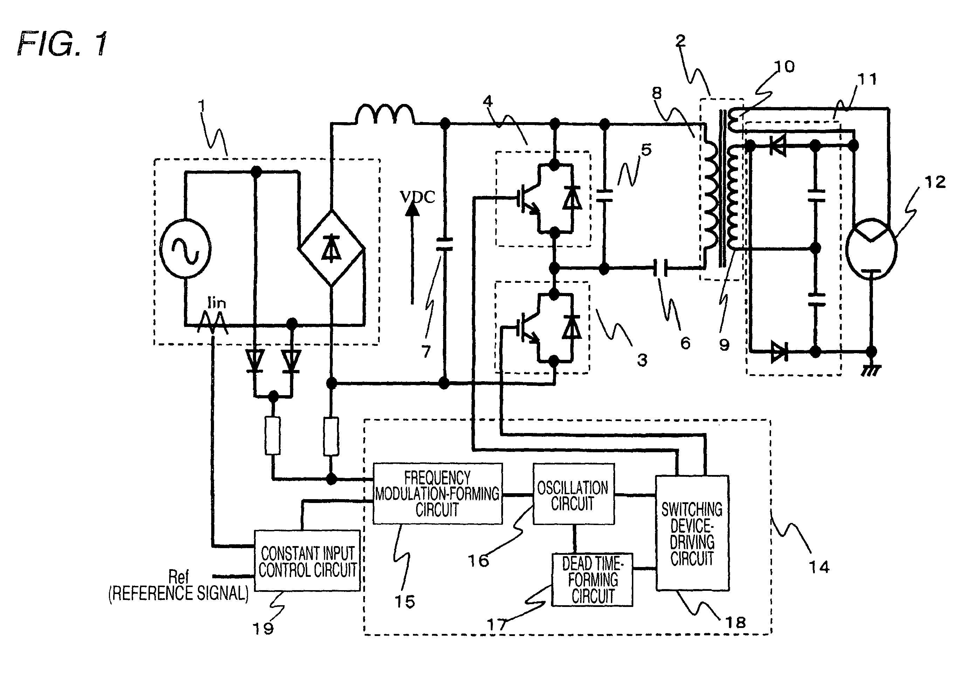

Fig. 1 is a diagram illustrating a circuit configuration for driving a magnetron according to the invention. A DC power supply 1, a leakage transformer 2, a first semiconductor switching element 3, a second semiconductor switching element 4, a first capacitor 5, a second capacitor 6, a third capacitor 7, a driving control IC unit 14, a full-wave voltage doubler rectifcation circuit 11, and a magnetron 12 constitute the overall circuit. The description of the overall circuit configuration will be omitted since it is the same as that shown in Fig. 12.

In the driving control IC unit 14 for driving the semiconductor switching elements 3 and 4, a frequency modulation-forming circuit 15 forms a frequency modulation waveform using a resistance divided waveform on the basis of the voltage of a commercial power supply. The frequency modulation-forming circuit 15 performs a feedback control receiving signals from a constant input control circuit 19 so as to obtain the desired input (200 w or 600 w) described above.

Next, on the basis of the signals obtained from the frequency modulation-forming circuit 15, an oscillation circuit 16 determines a practical operating frequency and a dead time-forming circuit 17 determines a desired dead time. Finally, a square wave formed by the switching device-driving circuit 18 is transmitted to the gates of the first semiconductor switching element 3 and the second semiconductor switching element 4.

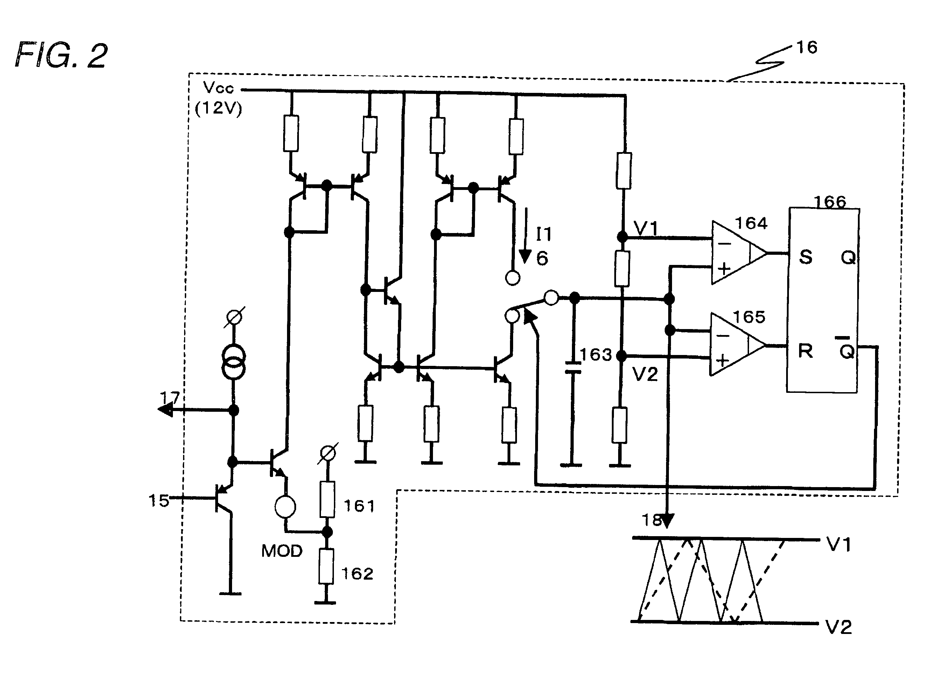

Fig. 2 shows the configuration of an oscillation circuit 16 in detail. The output powers of the comparators 164 and 165 are inputted to the S terminal and the R terminal of an SR flip-flop 166. The output of the inverted Q terminal of the SR flip-flop 166 forms a charge-discharge circuit of a capacitor 163. When the inverted Q terminal is in the level of Hi, I16 charges and the electric potential of the capacitor 163 increase. The electric potential of the capacitor 163 is outputted to the switching device-driving circuit 18. Sequentially, the electric potential of the (+) terminal of the comparator 164 increases and when the electric potential exceeds V1 of the (-) terminal, the output Hi is applied to the S terminal. Afterward, the inverted Q terminal of the SR flip-flop 166 is in the state of Lo, and thus the electric potential of the capacitor 163 discharges. In addition, when the electric potential of the (-) terminal of the comparator 165 discharges and then decreases below V2 of the electric potential of the (+) terminal, the output Hi is applied to the R terminal. Afterward, the inverted Q terminal of the SR flip-flop 166 becomes in the level of Hi and thus the electric potential of the capacitor 163 increases. By repeating the process, triangular save is carried to the switching device-driving circuit 18.

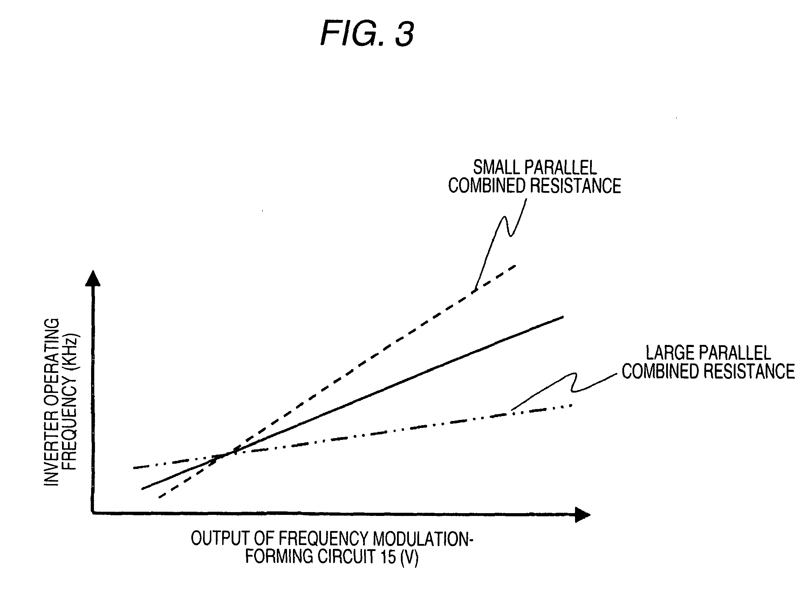

As a matter of course, on the basis of the signal coming from the frequency modulation-forming circuit 15, the charging current I16 of the capacitor 163 is determined by parallel combined resistance of the resistors 161 and 162 which exist in an MOD terminal shown in Fig. 2. That is, the volume of I16 determines the inclination of the triangular wave, that is, the inverter operating frequency. Fig. 3 is a graph illustrating a relationship between the output of the frequency modulation-forming circuit 15 and the inverter operating frequency configured by the resistors 161 and 162. As shown in Fig. 3, the smaller the parallel combined resistance value is, the sharper the inclination for the output variation of the frequency modulation-forming circuit 15 is. Conversely, the larger the value is, the gentler the inclination is. That is, the inverter operating frequency outputted by the frequency modulation-forming circuit 15 can be easily adjusted in accordance with the configuration of the resistors 161 and 162. In addition, in order to prevent the harmonics from occurring, it is important to enlarge the operating frequency of the power supply phase in the range from 0° to 90° as much as possible (Aspects 1 and 2)

(Second Embodiment)

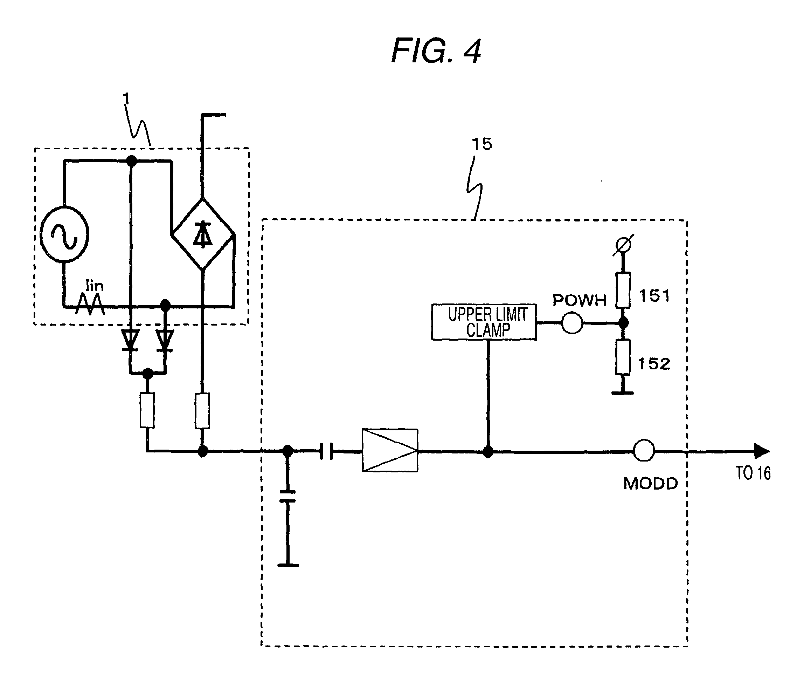

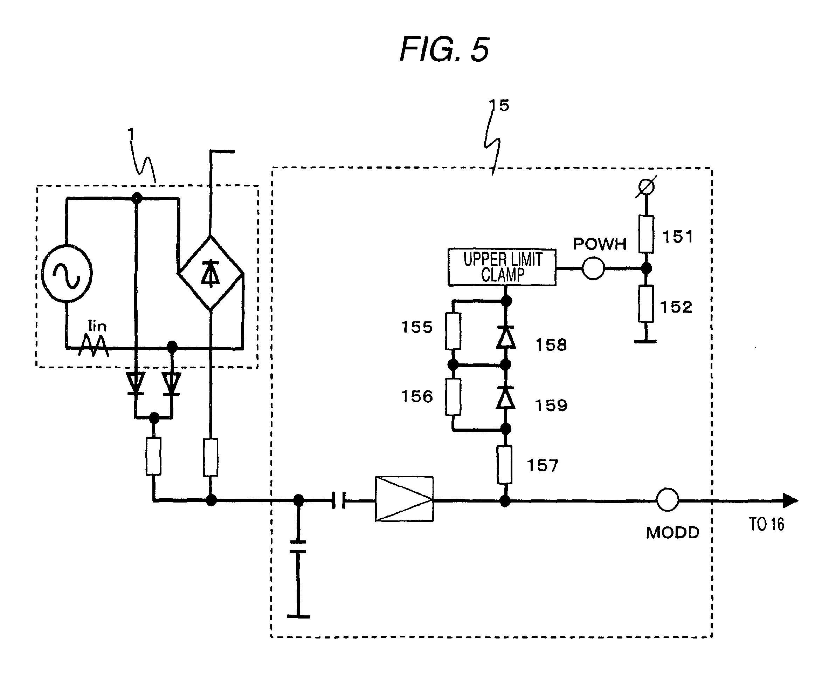

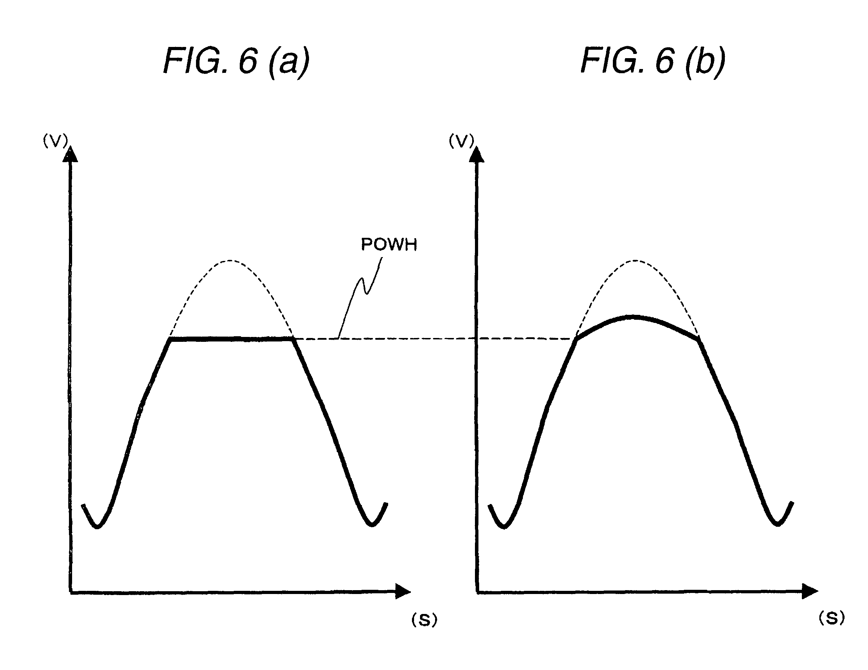

Fig. 4 is an exemplary diagram illustrating the frequency modulation-forming circuit 15 in detail shown in Fig. 1. The fixed voltage obtained in the resistors 151 and 152 becomes the upper limit on the basis of the voltage dividing waveform after the commercial power supply is rectified (Aspects 3 and 8). Fig. 6(a) shows the frequency modulation waveform in this time. On the basis of the commercial power rectifying voltage-dividing waveform indicated by the dashed line, the upper limit value is given as indicated by the solid line. Next, when diodes 158 and 159, and resistors 155, 156, and 157 are provided to an upper clamp shown in Fig. 5, the frequency modulation waveform can be formed as a curved line with some variation from reference voltage given in the resistors 151 and 152, not the fixed value (Aspect 9). Fig. 6(b) shows the curved line indicated by the solid line. In addition, in order to determine the upper limit as a variable value not a fixed value, an increase or decrease is possible on the basis of the voltage information of the commercial power supply (Aspects 10 and 11). In this manner, the optimal frequency modulation waveform can be formed in order to prevent the harmonics component from occurring even in the voltage of each power supply.

(Third Embodiment)

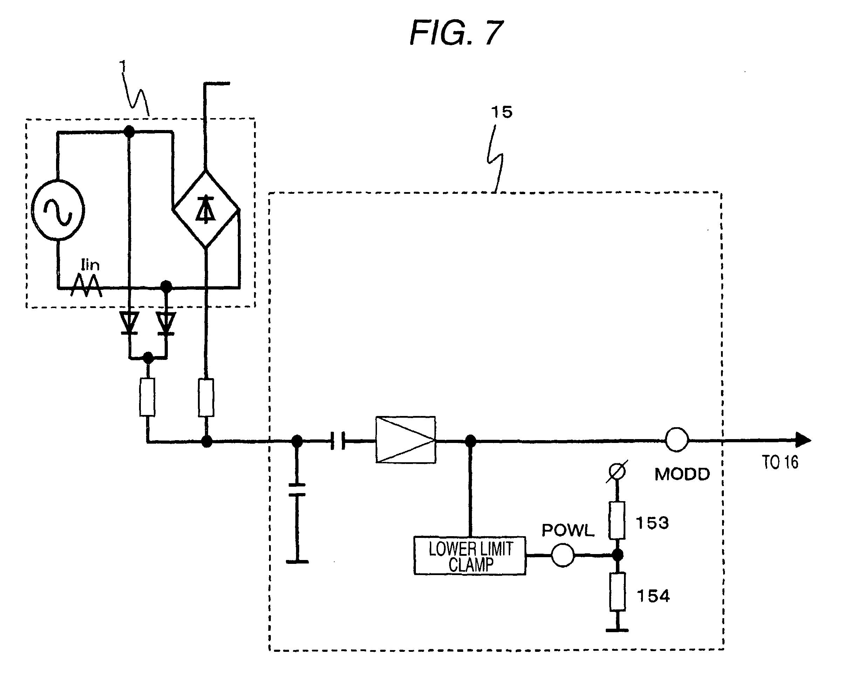

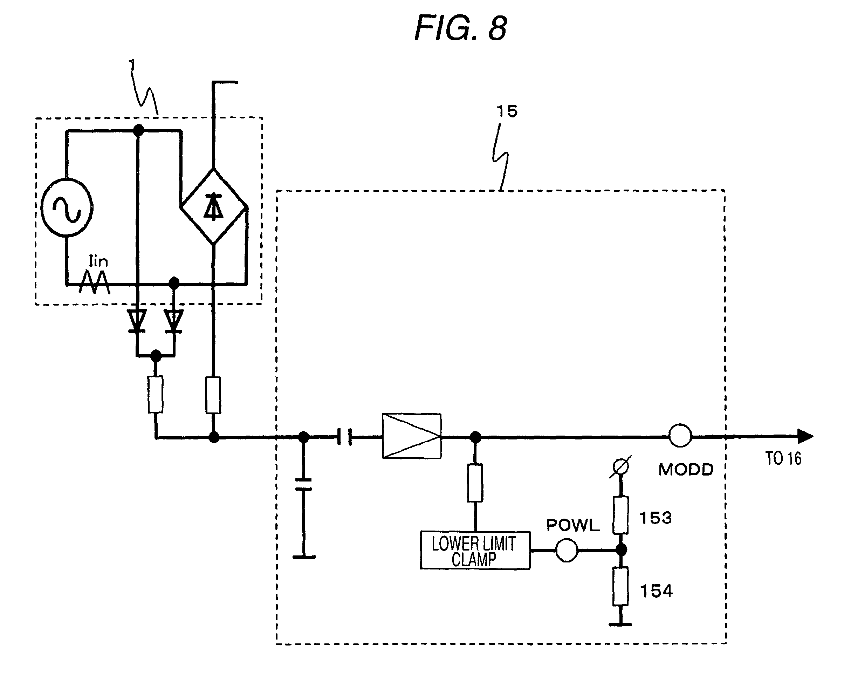

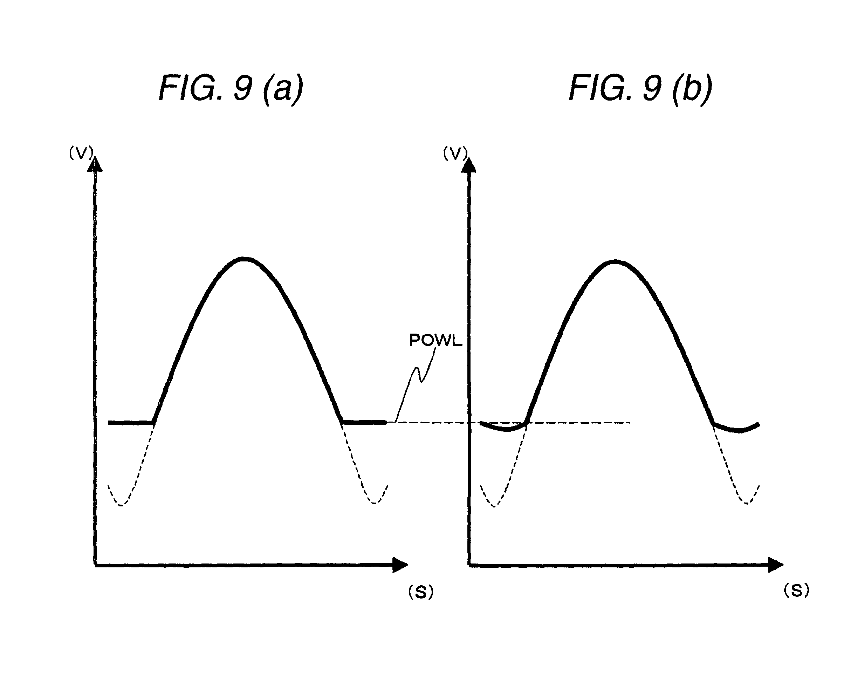

Fig. 7 is an exemplary diagram illustrating the frequency modulation-forming circuit 15 shown in Fig. 1. The lower limit value is restricted to the fixed voltage given from the resistors 153 and 154 on the basis of a voltage-dividing waveform after rectifying the commercial power supply. In this case, the lower limit clamp means the lower limit value corresponding to the lowest frequency restriction (Aspects 4, 5, 12, and 16). Fig. 9(a) shows the frequency modulation waveform in this case, and the lower limit (lower limit corresponding to the lowest frequency) indicated by the solid line is denoted on the basis of the commercial power rectifying voltage-dividing waveform indicated by the dashed line. Next, when a resistor is provided to the lower limit clamp shown in Fig. 8, the frequency modulation waveform can be formed as a curved line with some variation from the reference voltage obtained in the resistors 153 and 154 not a fixed value (Aspect 13). Fig. 9(b) shows the curved line indicated by the solid line. In addition, in order to determine the lower limit as a variable value not the fixed value of the lower limit clamp or the lowest frequency restriction, an increase or decrease is possible on the basis of the voltage information of the commercial power supply (Aspects 14, 15, and 17). In this configuration, the optimal frequency modulation waveform can be formed in order to prevent the harmonics component from occurring even in the voltage of each power supply.

(Fourth Embodiment)

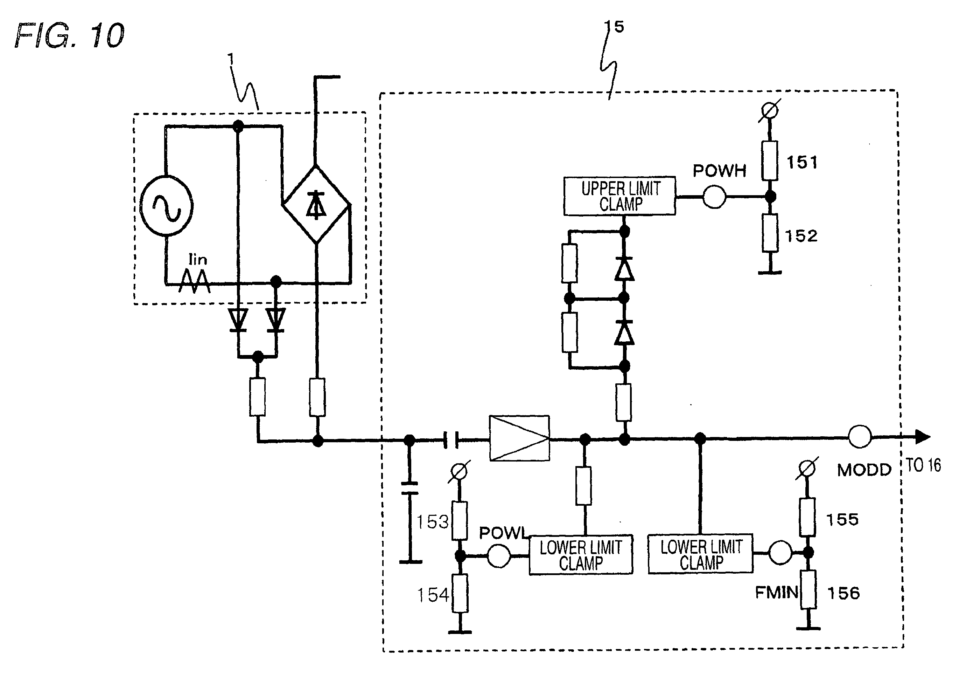

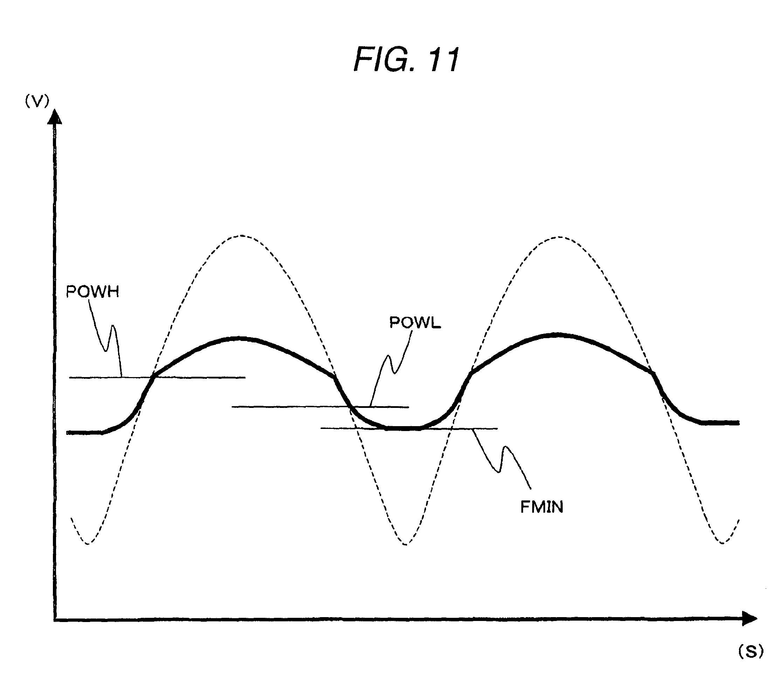

Fig. 10 is a diagram illustrating combined means for forming frequency modulation waveform in the frequency modulation-forming circuit 15 according to the second and third embodiments. By including the upper limit clamp, the lower limit clamp, the lower limit value corresponding to the lowest frequency restriction to the frequency modulation waveform, a waveform indicated by the solid line shown in Fig. 11 can be obtained, several frequency modulation is possible at each point of the voltage phase of the power supply from the relationship of the inverter operating frequency described in the first embodiment (Aspect 6). As a matter of course, in order not to fix the modulation means and to allow the voltage to be variable, an increase or decrease is possible on the basis of the voltage information of the commercial power supply. In the configuration, it is possible to form the optimal frequency modulation waveform to prevent the harmonic components from occurring in each voltage of the power supply. In addition, when the control agent parameter increases, the frequency modulation waveform which undergoes small variation can be effectively formed in spite of several non-uniformities, evaluating an optimal solution by a quality stability design method which is an improved method of the Taguchi Methods and its own science solution method of our company, and preventing the harmonics of the power supply more rapidly. The important point is that the difference between the upper limit clamp and the lower limit clamp is as small as possible and the frequency modulation waveform is nearly flat (Aspect 7).

Industrial Applicability

As describe above, the high frequency heating apparatus according to the invention can embody the current waveform in which a harmonic component is small by allowing the inverter operating frequency in each phase of a commercial power supply to be variable, and enlarging the difference in the operating frequencies of the phase range from 0° to 90°. Consequently, the high frequency heating apparatus can be applied to every kind of an apparatus using an inverter.

**Claims**

1.  A high frequency heating apparatus comprising:

    a semiconductor switching element (3, 4) adapted to perform a high frequency switching of an input voltage for driving a magnetron (12); wherein the input voltage is provided by a power supply, and wherein the operating frequency of the semiconductor switching element is variable; **characterized by** a driving control IC unit (14) adapted to adjust the operating frequency of the semiconductor switching element so that the operating frequency ascends in the phase range of the input voltage of the power supply from 0° to 90° and from 180° to 270° and descends in the phase range of the input voltage of the power supply from 90° to 180° and from 270° to 360°; and

wherein the difference between the maximum operating frequency of the ascending period and the minimum operating frequency of the descending period is large.

2.  The high frequency heating apparatus according to claim 1,**characterized in that** the operating frequency of the semiconductor switching element is adjusted by varying a parallel combined resistance value of series resistors (161, 162).

3.  The high frequency heating apparatus according to claim 1,**characterized in that** the variation in the operating frequency of the semiconductor switching element can be represented as the shape of a frequency modulation waveform; and wherein the frequency modulation waveform is formed on the basis of a rectification waveform of the voltage of the power supply and has an upper limit clamp.

4.  The high frequency heating apparatus according to claim 1, **characterized in that** the variation in the operating frequency of the semiconductor switching element can be represented as the shape of the frequency modulation waveform; and wherein the frequency modulation waveform is formed on the basis of a rectification waveform of the voltage of the power supply and has a lower limit clamp.

5.  The high frequency heating apparatus according to claim 1, **characterized in that** the variation in the operating frequency of the semiconductor switching element can be represented as the shape of the frequency modulation waveform; and wherein the frequency modulation waveform is formed on the basis of the rectification waveform of the voltage of the power supply and has a lower limit value corresponding to the restriction of the lowest frequency.

6.  The high frequency heating apparatus according to claim 1,**characterized in that** the variation in the operating frequency of the semiconductor switching element can be represented as the shape of the frequency modulation waveform; and wherein the frequency modulation waveform is formed on the basis of the rectification waveform of the voltage of the power supply and has an upper limit clamp, a lower limit clamp, a lower limit value corresponding to the restriction of the lowest frequency.

7. The high frequency heating apparatus according to claim 3, **characterized in that** the upper limit clamp is uniquely determined as a predetermined fixed value independent from a variation in voltage values of the power supply.

8. The high frequency heating apparatus according to claim 3, **characterized in that** the upper limit clamp is uniquely determined as a value that is increased or decreased by a resistor or a diode from a predetermined value independent from a variation in voltage values of the power supply.

9. The high frequency heating apparatus according to claim 3, **characterized in that** the upper limit clamp is determined as a reference value that is increased or decreased based on a variation in voltage values of the power supply.

10. The high frequency heating apparatus according to claim 3, **characterized in that** the upper limit clamp is determined as a value that is increased or decreased by a resistor or a diode from a predetermined value that varies based on a variation in voltage values of the power supply.

11. The high frequency heating apparatus according to claim 4, **characterized in that** the lower limit clamp is uniquely determined as a fixed value independent from a variation in voltage values of the power supply.

12. The high frequency heating apparatus according to claim 4, **characterized in that** the lower limit clamp is uniquely determined as a value that is increased or decreased by a resistor or a diode from a predetermined value independent from a variation in voltage values of the power supply.

13. The high frequency heating apparatus according to claim 4, **characterized in that** the lower limit clamp is determined as a reference value that is increased or decreased based on a variation in voltage values of the power supply.

14. The high frequency heating apparatus according to claim 4, **characterized in that** the lower limit clamp is determined as a value that is increased or decreased by a resistor or a diode from a predetermined value varied based on a variation in voltage values of the power supply.

15. The high frequency heating apparatus according to claim 5, **characterized in that** the lower limit value corresponding to the restriction of the lowest frequency is uniquely determined as a predetermined fixed value independent from a variation in voltage values of the power supply.

16. The high frequency heating apparatus according to claim 5, **characterized in that** the lower limit value corresponding to the restriction of the lowest frequency is uniquely determined as a predetermined fixed value that is increased or decreased based on a variation in voltage values of the power supply.

**Patentansprüche**

1. Hochfrequenz-Erhitzungsvorrichtung, die umfasst:

ein Halbleiter-Schaltelement (3, 4), das so eingerichtet ist, dass es ein Hochfrequenzschalten einer Eingangsspannung zum Ansteuern eines Magnetrons (12) durchführt; wobei die Eingangsspannung von einer Stromversorgungseinrichtung bereitgestellt wird, und wobei die Betriebsfrequenz des Halbleiter-Schaltelementes variabel ist; **gekennzeichnet durch** eine Ansteuer-IC-Einheit (14), die so eingerichtet ist, dass sie die Betriebsfrequenz des Halbleiter-Schaltelementes so reguliert, dass die Betriebsfrequenz in dem Phasenbereich der Eingangsspannung der Stromversorgungseinrichtung von 0° bis 90° sowie von 180° bis 270° ansteigt und in dem Phasenbereich der Eingangsspannung der Stromversorgungseinrichtung von 90° bis 180° sowie von 270° bis 360° abfällt; und

wobei die Differenz zwischen der maximalen Betriebsfrequenz der Anstiegsperiode und der minimalen Betriebsfrequenz der Abfallperiode groß ist.

2. Hochfrequenz-Erhitzungsvorrichtung nach Anspruch 1, **dadurch gekennzeichnet, dass** die Betriebsfrequenz des Halbleiter-Schaltelementes reguliert wird, indem ein paralleler kombinierter Widerstandswert von Reihenwiderständen (161, 162) geändert wird.

3. Hochfrequenz-Erhitzungsvorrichtung nach Anspruch 1, **dadurch gekennzeichnet, dass** die Änderung der Betriebsfrequenz des Halbleiter-Schaltelementes als die Form einer Frequenzmodulations-Wellenform dargestellt werden kann; und wobei die Frequenzmodulations-Wellenform auf Basis einer Gleichrichtungs-Wellenform der Spannung der Stromversorgungseinrichtung ausgebildet wird und einen oberen Clamp-Grenzwert hat.

4. Hochfrequenz-Erhitzungsvorrichtung nach Anspruch 1, **dadurch gekennzeichnet, dass** die Änderung der Betriebsfrequenz des Halbleiter-Schaltelementes als die Form einer Frequenzmodulations-Wellenform dargestellt werden kann; und wobei die Frequenzmodulations-Wellenform auf Basis einer Gleichrichtungs-Wellenform der Spannung der Stromversorgungseinrichtung ausgebildet wird und einen unteren Clamp-Grenzwert hat.

5. Hochfrequenz-Erhitzungsvorrichtung nach Anspruch 1, **dadurch gekennzeichnet, dass** die Änderung der Betriebsfrequenz des Halbleiter-Schaltelementes als die Form einer Frequenzmodulations-Wellenform dargestellt werden kann; und wobei die Frequenzmodulations-Wellenform auf Basis der Gleichrichtungs-Wellenform der Spannung der Stromversorgungseinrichtung ausgebildet wird und einen unteren Grenzwert hat, der der Beschränkung der niedrigsten Frequenz entspricht.

6. Hochfrequenz-Erhitzungsvorrichtung nach Anspruch 1, **dadurch gekennzeichnet, dass** die Änderung der Betriebsfrequenz des Halbleiter-Schaltelementes als die Form einer Frequenzmodulations-Wellenform dargestellt werden kann; und wobei die Frequenzmodulations-Wellenform auf Basis einer Gleichrichtungs-Wellenform der Spannung der Stromversorgungseinrichtung ausgebildet wird und einen oberen Clamp-Grenzwert, einen unteren Clamp-Grenzwert sowie einen unteren Grenzwert hat, der der Beschränkung der niedrigsten Frequenz entspricht.

7. Hochfrequenz-Erhitzungsvorrichtung nach Anspruch 3, **dadurch gekennzeichnet, dass** der obere Clamp-Grenzwert eindeutig als ein vorgegebener fester Wert bestimmt wird, der unabhängig von einer Änderung von Spannungswerten der Stromversorgungseinrichtung ist.

8. Hochfrequenz-Erhitzungsvorrichtung nach Anspruch 3, **dadurch gekennzeichnet, dass** der oberen Clamp-Grenzwert eindeutig als ein Wert bestimmt wird, der unabhängig von einer Änderung von Spannungswerten der Stromversorgungseinrichtung durch einen Widerstand oder eine Diode von einem vorgegebenen Wert erhöht oder verringert wird.

9. Hochfrequenz-Erhitzungsvorrichtung nach Anspruch 3, **dadurch gekennzeichnet, dass** der obere Clamp-Grenzwert als ein Bezugswert bestimmt wird, der auf Basis einer Änderung von Spannungswerten der Stromversorgungseinrichtung erhöht oder verringert wird.

10. Hochfrequenz-Erhitzungsvorrichtung nach Anspruch 3, **dadurch gekennzeichnet, dass** der obere Clamp-Grenzwert als ein Wert bestimmt wird, der durch einen Widerstand oder eine Diode von einem vorgegebenen Wert erhöht oder verringert wird, der auf Basis einer Änderung von Spannungswerten der Stromversorgungseinrichtung variiert.

11. Hochfrequenz-Erhitzungsvorrichtung nach Anspruch 4, **dadurch gekennzeichnet, dass** der untere Clamp-Grenzwert eindeutig als ein fester Wert bestimmt wird, der unabhängig von einer Änderung von Spannungswerten der Stromversorgungseinrichtung ist.

12. Hochfrequenz-Erhitzungsvorrichtung nach Anspruch 4, **dadurch gekennzeichnet, dass** der untere Clamp-Grenzwert eindeutig als ein Wert bestimmt wird, der unabhängig von einer Änderung von Spannungswerten der Stromversorgungseinrichtung durch einen Widerstand oder eine Diode von einem vorgegebenen Wert erhöht oder verringert wird.

13. Hochfrequenz-Erhitzungsvorrichtung nach Anspruch 4, **dadurch gekennzeichnet, dass** der untere Clamp-Grenzwert als ein Bezugswert bestimmt wird, der auf Basis einer Änderung von Spannungswerten der Stromversorgungseinrichtung erhöht oder verringert wird.

14. Hochfrequenz-Erhitzungsvorrichtung nach Anspruch 4, **dadurch gekennzeichnet, dass** der untere Clamp-Grenzwert als ein Wert bestimmt wird, der durch einen Widerstand oder eine Diode von einem vorgegebenen Wert erhöht oder verringert wird, der auf Basis einer Änderung von Spannungswerten der Stromversorgungseinrichtung geändert wird.

15. Hochfrequenz-Erhitzungsvorrichtung nach Anspruch 5, **dadurch gekennzeichnet, dass** der untere Grenzwert, der der Beschränkung der niedrigsten Frequenz entspricht, eindeutig als ein vorgegebener fester Wert bestimmt wird, der unabhängig von einer Änderung von Spannungswerten der Stromversorgungseinrichtung ist.

16. Hochfrequenz-Erhitzungsvorrichtung nach Anspruch 5, **dadurch gekennzeichnet, dass** der untere Grenzwert, der der Beschränkung der niedrigsten Frequenz entspricht, eindeutig als ein vorgegebener fester Wert bestimmt wird, der auf Basis einer Änderung von Spannungswerten der Stromversorgungseinrichtung erhöht oder verringert wird.

**Revendications**

1. Appareil de chauffage haute fréquence comprenant :

un élément commutateur à semiconducteur (3, 4) adapté à effectuer une commutation à haute fréquence d'une tension d'entrée pour commander un magnétron (12) ;

dans lequel la tension d'entrée est fournie par une alimentation,

et dans lequel la fréquence de fonctionnement de l'élément commutateur à semiconducteur est variable ;

**caractérisé par**

une unité de circuit intégré de commande (14) adaptée à régler la fréquence de fonctionnement de l'élément commutateur à semiconducteur de façon que la fréquence de fonctionnement augmente dans la gamme de phases de la tension d'entrée de l'alimentation de 0° à 90° et de 180° à 270° et diminue dans la gamme de phases de la tension d'entrée de l'alimentation de 90° à 180° et de 270° à 360° ; et

dans lequel la différence entre la fréquence de fonctionnement maximale de la période de montée et la fréquence de fonctionnement minimale de la période de descente est importante.

2. Appareil de chauffage haute fréquence selon la revendication 1, **caractérisé en ce que** la fréquence de fonctionnement de l'élément commutateur à semiconducteur est réglée en faisant varier une valeur de résistances combinées en parallèle de résistances en série (161, 162).

3. Appareil de chauffage haute fréquence selon la revendication 1, **caractérisé en ce que** la variation de la fréquence de fonctionnement de l'élément commutateur à semiconducteur peut être représentée par une forme d'onde de modulation de fréquence ; et

dans lequel la forme d'onde de modulation de fréquence est constituée sur la base d'une forme d'onde de redressement de la tension de l'alimentation et comporte un caleur de limite supérieure.

4. Appareil de chauffage haute fréquence selon la revendication 1, **caractérisé en ce que** la variation de la fréquence de fonctionnement de l'élément commutateur à semiconducteur peut être représentée par la forme d'onde de modulation de fréquence ; et dans lequel la forme d'onde de modulation de fréquence est constituée sur la base d'une forme d'onde de redressement de la tension de l'alimentation et comporte un caleur de limite inférieure.

5. Appareil de chauffage haute fréquence selon la revendication 1, **caractérisé en ce que** la variation de la fréquence de fonctionnement de l'élément commutateur à semiconducteur peut être représentée par la forme d'onde de modulation de fréquence ; et

dans lequel la forme d'onde de modulation de fréquence est constituée sur la base de la forme d'onde de redressement de la tension de l'alimentation et comporte une valeur limite inférieure correspondant à la limitation de la fréquence la plus basse.

6. Appareil de chauffage haute fréquence selon la revendication 1, **caractérisé en ce que** la variation de la fréquence de fonctionnement de l'élément commutateur à semiconducteur peut être représentée par la forme d'onde de modulation de fréquence ; et dans lequel la forme d'onde de modulation de fréquence est constituée sur la base de la forme d'onde de redressement de la tension de l'alimentation et comporte un caleur de limite supérieure, un caleur de limite inférieure, une valeur limite inférieure correspondant à la limitation de la fréquence la plus basse.

7. Appareil de chauffage haute fréquence selon la revendication 3, **caractérisé en ce que** le caleur de limite supérieure est déterminé de façon unique comme une valeur fixe prédéterminée indépendante de la variation des valeurs de tension de l'alimentation.

8. Appareil de chauffage haute fréquence selon la revendication 3, **caractérisé en ce que** le caleur de limite supérieure est déterminé de façon unique comme une valeur qui augmente ou diminue au moyen d'une résistance ou d'une diode à partir d'une valeur prédéterminée indépendante de la variation des valeurs de tension de l'alimentation.

9. Appareil de chauffage haute fréquence selon la revendication 3, **caractérisé en ce que** le caleur de limite supérieure est déterminé comme une valeur de référence qui augmente ou diminue sur la base de la variation des valeurs de tension de l'alimentation.

10. Appareil de chauffage haute fréquence selon la revendication 3, **caractérisé en ce que** le caleur de limite supérieure est déterminé comme une valeur qui augmente ou diminue au moyen d'une résistance ou d'une diode à partir d'une valeur prédéterminée qui varie sur la base de la variation des valeurs de tension de l'alimentation.

11. Appareil de chauffage haute fréquence selon la revendication 4, **caractérisé en ce que** le caleur de limite inférieure est déterminé de façon unique comme une valeur fixe indépendante de la variation des valeurs de tension de l'alimentation.

12. Appareil de chauffage haute fréquence selon la revendication 4, **caractérisé en ce que** le caleur de limite inférieure est déterminé de façon unique comme une valeur qui augmente ou diminue au moyen d'une résistance ou d'une diode à partir d'une valeur prédéterminée indépendante de la variation des valeurs de tension de l'alimentation.

**13.** Appareil de chauffage haute fréquence selon la revendication 4, **caractérisé en ce que** le caleur de limite inférieure est déterminé comme une valeur de référence qui augmente ou diminue sur la base de la variation des valeurs de tension de l'alimentation.

**14.** Appareil de chauffage haute fréquence selon la revendication 4, **caractérisé en ce que** le caleur de limite inférieure est déterminé comme une valeur qui augmente ou diminue au moyen d'une résistance ou d'une diode à partir d'une valeur prédéterminée qui varie sur la base de la variation des valeurs de tension de l'alimentation.

**15.** Appareil de chauffage haute fréquence selon la revendication 5, **caractérisé en ce que** la valeur limite inférieure correspondant à la limitation de la fréquence la plus basse est déterminée de façon unique comme une valeur fixe prédéterminée indépendante de la variation des valeurs de tension de l'alimentation.

**16.** Appareil de chauffage haute fréquence selon la revendication 5, **caractérisé en ce que** la valeur limite inférieure correspondant à la limitation de la fréquence la plus basse est déterminée de façon unique comme une valeur fixe prédéterminée qui augmente ou diminue sur la base de la variation des valeurs de tension de l'alimentation.

*FIG. 1*

CONSTANT INPUT CONTROL CIRCUIT

Ref (REFERENCE SIGNAL)

FREQUENCY MODULATION-FORMING CIRCUIT

OSCILLATION CIRCUIT

SWITCHING DEVICE-DRIVING CIRCUIT

DEAD TIME-FORMING CIRCUIT

VDC

Iin

EP 1 806 954 B1

# FIG. 2

## FIG. 3

SMALL PARALLEL
COMBINED RESISTANCE

LARGE PARALLEL
COMBINED RESISTANCE

INVERTER OPERATING
FREQUENCY (kHz)

OUTPUT OF FREQUENCY MODULATION-
FORMING CIRCUIT 15 (V)

*FIG. 4*

# FIG. 5

EP 1 806 954 B1

FIG. 6 (a)

FIG. 6 (b)

EP 1 806 954 B1

FIG. 7

EP 1 806 954 B1

## FIG. 8

FIG. 9 (a)

FIG. 9 (b)

(V)

(V)

POWL

(S)

(S)

FIG. 10

## FIG. 11

EP 1 806 954 B1

# FIG. 12

VDC

DRIVING UNIT

EP 1 806 954 B1

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004006384 A
- JP 2000058252 A
- EP 1441566 A2